# EUROPEAN PATENT APPLICATION

(11) **EP 3 902 276 A1**
(43) Date of publication of application: **27.10.2021**
(21) Application number: 20170744.5
(22) Date of filing: 21.04.2020
(51) Int. Cl.: H04N 21/462, H04N 21/2343, H04N 21/845, H04N 21/643, H04N 21/81, H04N 21/2187, H04N 21/262, H04N 21/84, H04N 21/6373

(54) **VIDEO STREAM CONTROL**

(71) Applicant: THEO Technologies, 3001 Leuven (BE)
(72) Inventor: Okerman, Egon, 3000 Leuven (BE); Van Tichelen, Darragh, 3000 Leuven (BE); Vounckx, Johan, 3210 Linden (BE); SPEELMANS, Pieter-Jan, 3290 Diest (BE)
(74) Representative: IP HILLS NV

(57) **Abstract**

Example embodiments describe a method for controlled video streaming from a remote video service 351 to a video playback client 350; wherein the remote video service is configured to make a first video stream available to the client upon request in at least a temporal independent version and a temporal dependent version; the method comprising: i) upon a first request (311) from the video playback client, sending (312) an initial video packet from the temporal independent version, and upon a second request from the video playback client (321) continuously sending (322) frames from the temporal dependent version, thereby streaming a first video stream to the video playback client; ii) making an updated manifest file available for retrieval by the video playback client; iii) notifying (331) the client of the updated manifest file; iv) upon request of the video playback client, sending (332-333) the updated manifest file to the video playback client.

## Description

### Technical Field

Various example embodiments relate to controlled video streaming from a remote video service to a video playback client wherein the remote video service is configured to make a video stream available to the client upon request in at least a temporal independent version and a temporal dependent version.

### Background

Media streaming is immensely popular nowadays. It allows viewers to start watching media content without the need to completely download the content beforehand. A large portion of the Internet traffic consists of such media streamed from media services to clients, typically from a content distribution network, a CDN, to a video player application running on a PC, a tablet, a smartphone, a set-up box, a TV etc. In media streaming, the video is further delivered on demand or on request of the client. The request then specifies a certain starting point in time upon which the video should start. This starting point may be explicit, e.g. by specifying it in the request, or implicit, e.g. where the starting point is derived from the time of the request which is the case for live streaming. From a technology point of view, media streaming is completely different from traditional broadcasting technology. Media streaming is a request or pull based unicast technology whereas traditional broadcasting is a push based broadcast.

While both technologies are different, they share the common aim of video control from the origin side. This means that the stream provider wants to keep control over the video stream that is delivered to the client playing the video and, hence, over the video as watched by the viewer. More particular, the provider needs to be able to interrupt an ongoing video stream at some point in time, switch to another video stream and then return to the initial video stream. This is useful for dynamically introducing personalized commercials, news flashes or other video content, or for switching from one video stream to another one.

One available streaming technology is chunked or segmented streaming. The media is then divided in smaller chunks or segments which are downloaded and played by the client one after the other. Such protocols may also offer adaptive bitrate streaming allowing the client to switch between different bit rates, resolutions or codec depending on the available resources. To achieve this, versions of the streams or representations, each with a different bit rate, resolution of codec, are made available on the server for the client. Information on the different representations and their segmenting is then available by means of a manifest file that is updated regularly. Examples of such streaming protocols are HTTP Adaptive Streaming, HAS, protocols are MPEG-DASH published as ISO/IEC 23009-1:2012, HTTP Dynamic Streaming by Adobe, HTTP Live Streaming (HLS) by Apple and Smooth Streaming, a Microsoft IIS Media Services extension.

Different solutions have been proposed for providing stream control in segment based streaming protocols. One of them is referred to as server-side-add-insertion, SSAI wherein a personalized manifest file is dynamically created within the content distribution network, CDN, whenever another intermediate stream is to be inserted. As the client is fetching regular updates of the manifest file, it will retrieve this personalized manifest file and play the intermediate stream as specified in the personalized manifest file.

Another available streaming technology is disclosed in EP3515075 wherein a stream is not further subdivided into smaller and smaller independently playable chunks or segments. Instead, a stream is made available in an independent version or representation and one or more dependent versions or representations. The independent version then provides a stream of temporal independent frames, i.e. frames that are decodable independently from each other. A certain dependent version then provides a compressed stream according to a certain representation with a certain bit rate and can have any type of frames. Upon playback, a client playing the stream then first retrieves by a first independent request a first video packet from the independent version to build up the image in the video player and then retrieves the subsequent frames by a single dependent request from an available dependent version. An advantage of this method is that a video player can start playback from any moment in time and is not limited to the boundaries of segments. This greatly reduces the start-up time for live streaming and reducing skipping times for video on demand. Further, there is no need to continuously update manifest files as the stream progresses because the dependent request may be performed by a single byte range request. It therefore suffices that the client retrieves the manifest one time when setting up the stream. A problem with this streaming technology is that it does not allow for stream control and, hence, does not allow for server-side-add-insertion.

### Summary

The scope of protection sought for various embodiments of the invention is set out by the independent claims.

The embodiments and features described in this specification that do not fall within the scope of the independent claims, if any, are to be interpreted as examples useful for understanding various embodiments of the invention.

Amongst others, it is an object of embodiments of the invention to provide controlled video streaming from a remote video service to a video playback client wherein the remote video service is configured to make a video stream available to the client upon request in at least a temporal independent version and a temporal dependent version.

This object is achieved, according to a first example aspect of the present disclosure, by a method for controlled video streaming from a remote video service to a video playback client. The remote video service is configured to make a first video stream available to the client upon request in at least a temporal independent version and a temporal dependent version. The method further comprises:
- by the client, upon a first request to the remote video service, retrieving and playing an initial video packet from the temporal independent version, and upon a second request to the remote video service, continuously receiving and playing frames from the temporal dependent version, thereby streaming a first video stream;
- by the remote video service, making an updated manifest file available for retrieval by the video playback client;
- by the remote video service, notifying the client of the updated manifest file;
- by the client, retrieving the updated manifest file from the remote video service.

In other words, the remote video service makes at least two versions of the first video stream available to the video playback client. The temporal independent version comprises key frames. A key frame is a frame that is decodable independently from other frames in the video stream. A key frame does not comprise temporal dependencies but may comprise spatial dependencies. A key frame is sometimes referred to as an I-frame. The dependent version of the video stream also comprises dependent frames, i.e. frames for which information of other frames is needed in order to decode them. Frames of the dependent version may thus have temporal dependencies in order to decode them. The video service makes these two versions available to the video playback client, i.e. the video playback client may retrieve any chosen frame from the two versions upon request. When a video playback client requests a stream of the video at an arbitrary point in time, the server provides at least the first frame in an independent version as an initial video packet and, the following frames from the dependent version of the video. Further information on the video stream is available through a manifest file, e.g. information on the location and quality metrics of one or more independent versions and dependent versions of the first stream. The location of the manifest file, e.g. its URL, may be provided by the video service, e.g. by including the URL in a HTML document.

As upon the second request the first video stream is provided in a continuous manner, there is no need for the video playback client to retrieve updated versions of the manifest file on a regular basis as it is the case for segmented video streaming. Therefore, the video service notifies the video playback client of an update of the manifest file. Thereupon, the video playback client retrieves the updated manifest files. The above method thus provide a way for stream control by means of an updated manifest file for video streaming methods that do not rely on the need for fast updating of the manifest file. In other words, updates of the manifest file is determined by changes in the control of the video stream rather than the continuous updating of references to individual chunks or segments.

According to an example embodiment, the notifying is performed by an in-stream information field contained in the first video stream.

In other words, this field is contained within the served continuous stream of dependent frames. This may for example be done by foreseeing such a field in a video container format holding a dependent frame. Alternatively, this may be done by inserting a separate packet containing the information field in between the video packets holding the respective dependent frames. In any case, when the video playback client encounters the information field, it is notified of the updated manifest file and retrieves the manifest file accordingly. By foreseeing an in-stream information field, no further control channel between the video client and video service is required thereby minimizing the overhead.

According to an example embodiment, the notifying is performed by a notification message outside the first video stream. This way of notification may be advantageous for unforeseen stream control because no manipulation of the video stream is required for the notification.

According to an example embodiment, the updated manifest file comprises an identification of at least one other video stream in at least a temporal independent version and a temporal dependent version and comprises an instruction for the playback of the at least one other video stream; the method further comprising, by the client, streaming the at least one other video stream.

In other words, the updated manifest file is used by the video service to notify the video playback client that it needs to switch to another, e.g. a second, video stream. This second video stream being identified by another temporal independent version and temporal dependent versions.

This updated manifest file may further comprise an instruction for resuming the first video stream after the playback of the at least one other video stream. The method then further comprises, by the client, resuming the streaming of the first video stream back to the first video stream after the playback of the second video stream.

This way, by a single information field and accompanying updated manifest file, the video service can control the insertion of a second stream into the playback of the first stream.

Alternatively, the switching back from the at least one other stream may be performed as follows:
- by the remote video service, making a second updated manifest file available for retrieval by the video playback client; the second updated manifest file further comprising an instruction for resuming the first video stream;
- by the remote video service, notifying the client of said second updated manifest file;
- by the client, retrieving the second updated manifest file from the remote video service; and
- by the client, resuming the playback of the first video stream after the playback of the at least one other video stream.

In other words, the video service notifies the video playback client again during the playback of the second stream that another update of the manifest is available.

According to an example embodiment, the method further comprises:
- by the remote video service, making a second updated manifest file available for retrieval by the video playback client comprising an identification of a second at least one other video stream in at least a temporal independent version and a temporal dependent version and comprising an instruction for the playback of the second at least one other video stream; the method further comprising;
- by the remote video service, notifying the client of said second updated manifest file;
- by the client, retrieving the second updated manifest file from the remote video service; and
- by the client, streaming the second at least one other video stream.

According to example embodiments, a video stream may be subdivided in separate portions, i.e. the initial manifest file only allows the playback of a first portion of the first video stream, e.g. the first 10 or 20 minutes. The updated manifest file then comprises an identification of a subsequent portion of the first video stream. The video playback client then streams the subsequent portion of the first video stream by, upon a first request, receiving and playing an initial video packet of the subsequent portion from the temporal independent version, and, upon a second request continuously receiving and playing frames of the subsequent portion from the temporal dependent version.

This allows controlling the playback of a single video stream by the video service. For example, certain conditions may be checked first by the video service before making the updated manifest file available.

According to example embodiments, the updated manifest file comprises an identification of a metadata event. The video playback client then fetches the metadata event while continuing the continuously receiving and playing frames from the temporal dependent version.

The metadata event may be any kind of event that does not interrupt the playback of the first video stream, e.g. a notification for the viewer, information on subtitles, availability of other qualities etc.

According to a second example aspect, the disclosure relates to method for controlled video streaming from a remote video service to a video playback client; and wherein the remote video service is configured to make a first video stream available to the client upon request in at least a temporal independent version and a temporal dependent version; the method comprising, by the video playback client:
- upon a first request to the remote video service, retrieving and playing an initial video packet from the temporal independent version, and upon a second request to the remote video service, continuously receiving and playing frames from the temporal dependent version, thereby streaming a first video stream;
- receiving a notification of an updated manifest file; and
- retrieving the updated manifest file from the remote video service.

According to a third example aspect, the disclosure relates to a method for controlled video streaming from a remote video service to a video playback client; and wherein the remote video service is configured to make a first video stream available to the client upon request in at least a temporal independent version and a temporal dependent version; the method comprising, by the remote video service:
- upon a first request from the video playback client, sending an initial video packet from the temporal independent version, and upon a second request from the video playback client continuously sending frames from the temporal dependent version, thereby streaming a first video stream to the video playback client;
- making an updated manifest file available for retrieval by the video playback client;
- notifying the client of the updated manifest file;
- upon request of the video playback client, sending the updated manifest file to the video playback client.

According to a fourth example aspect, the disclosure relates to a networking device comprising at least one processor and at least one memory including computer program code, the at least one memory and computer program code configured to, with the at least one processor, cause the controller to perform any of the steps performed by the video playback client or the remote video service according to the first to third example aspect.

According to a fifth example aspect, the disclosure relates to a computer program product comprising computer-executable instructions for causing the performance of the networking device according to the fourth example aspect.

According to a sixth example aspect, the disclosure relates to a computer readable storage medium comprising computer-executable instructions for performing the steps by the video playback client and/or the video service according to first to third example aspect when the program is run on a computer.

### Brief Description of the Drawings

Some example embodiments will now be described with reference to the accompanying drawings.
Fig. 1 shows an example embodiment of steps performed by a video client and video service for the playback of a video stream;
Fig. 2 shows a video stream containing a first and second portion as retrieved by a video playback client according to an example embodiment;
Fig. 3 shows a sequence diagram illustrating the streaming of a video stream containing different portions between a video client and video service according to an example embodiment;
Fig. 4 shows the playback of a second video stream within a first video stream by a video playback client according to an example embodiment;
Fig. 5A and Fig. 5B together, show a sequence diagram illustrating the streaming of video streams in between another video stream between a video client and video service according to an example embodiment;
Fig. 6 shows the playback of a second video stream within a first video stream by a video playback client according to an example embodiment;
Fig. 7A and Fig. 7B together, show a sequence diagram illustrating the streaming of video streams in between another video stream between a video client and video service according to an example embodiment;
Fig. 8 show a sequence diagram illustrating providing of metadata from a video service to a video client according to an example embodiment;
Fig. 9 show a sequence diagram illustrating the switching between a first video stream from a first video service to a second video stream from a second video service; and
Fig. 10 shows an example embodiment of a suitable computing system 500 for performing one or several steps in embodiments of the invention.

### Detailed Description of Embodiment(s)

The present disclosure relates to the streaming of video from a video service to a video playback client, further also referred to as client. A video received by a client is a combination of ordered still pictures or frames that are decoded or decompressed and played one after the other within a video application. To this respect, a client may be any device capable of receiving a digital representation of a video over a communication network and capable of decoding the representation into a sequence of frames that can be displayed on a screen to a user. Examples of devices that are suitable as a client are desktop and laptop computers, smartphones, tablets, setup boxes and TVs. A client may also refer to a video player application running on any of such devices. Streaming of video refers to the concept that the client can request a video from a server and start the playback of the video upon receiving the first frames without having received all the frames of the video. A streaming server is then a server that can provide such streaming of videos upon request of a client to the client over a communication network, for example over the Internet, over a Wide Area Network (WAN) or a Local Area Network (LAN).

Video received from a streaming server may be compressed according to a video compression specification or standard such as H.265/MPEG-H HEVC, H.264/MPEG-4 AVC, H.263/MPEG-4 Part 2, H.262/MPEG-2, SMPTE 421 M (VC-1), AOMedia Video 1 (AV1) and VP9. According to such standards, the video frames are compressed in size by using spatial image compression and temporal motion compensation. Frames on which only spatial image compression is applied or no compression is applied are referred to as temporal independent frames, key frames, independent frames or I-frames. A key frame is thus a frame that is decodable independently from other frames in the video. Frames to which temporal motion compensation is applied, either in combination with image compression, are referred to as temporal dependent frames or, shortly dependent frames. Dependent frames are thus frames for which information of other frames is needed to decompress them. Dependent frames are sometimes further categorized in P frames and B frames. P frames can use data from previous frames to decode and are thus more compressible than I frames. B frames can use both previous and forward frames to decode and may therefore achieve the highest amount of data compression.

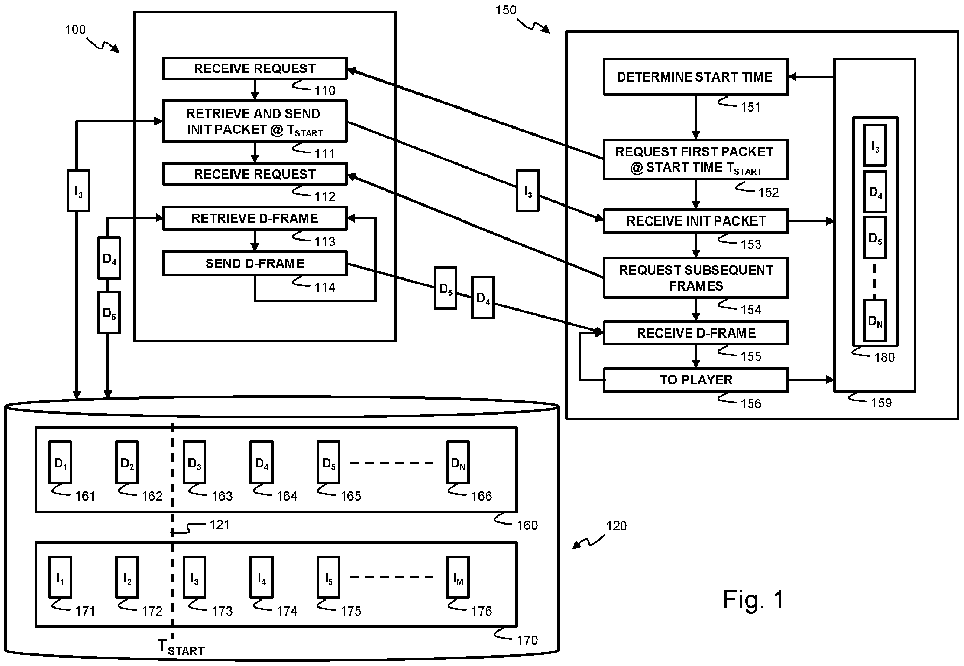

Fig. 1 illustrates a video streaming server 100 for providing video streams to a video playback client 150 according to an embodiment of the invention. Fig. 1 illustrates steps 151 to 156 performed by the client 150 to play a video 180 within a video player 159, e.g. a video player application or a web browser. The steps performed by the client 150 interact with steps 110 to 114 performed by the server 100. At a certain moment in time, the client 150 determines in step 151 to stream a video from server 100 starting at a selected moment in time within the video, i.e. the starting time 121. Starting time 121 may be the beginning of the video as the result of a user that starts to watch the video. Starting time 121 may also be any arbitrary time within the course of the video as the result of a forward seeking action by the viewer during the playback of the video. Starting time 121 may also correspond to a current time when the video stream is a live stream. The client 150 then proceeds to step 152 in which it sends a first request to the server 100 for an initial video packet comprising a key frame that corresponds with the starting time 121.

Thereupon, the server 100 receives the request at step 110. The server then determines the key frame which corresponds to the requested starting time 121 from a temporal independent version 170 of the video. In the embodiment of Fig. 1, this temporal independent version is available in a data store 120 accessible by the server 100. The temporal independent version of the video is a version of the video that only comprises key frames 171 to 176. Apart from this version, the data store 120 also comprises a temporal dependent version 160 of the video comprising frames 161 to 166. The temporal dependent version 160 may comprise both dependent and independent frames. As the client may request an independent frame corresponding to any starting point within the video, it may be said that the independent version 160 of the video is available to the client 150 upon request. A request for a video frame or video packet from the independent version is further also referred to as an independent request. In order to determine the corresponding key frame, the server 100 may for example do one of the following: i) select the key frame 173 with a time stamp which is the closest to the starting time 121; ii) select the key frame 173 which is subsequent to the starting time 121; or iii) select the key frame 172 which comes prior to the starting time 121. Alternatively, this selection may be performed by the client, i.e. the sequence number of the frame may be determined by the client. After retrieval of the key frame 173, the server 100 sends the key frame 173 as a initialization or initial video packet in response to the client 150. The client then receives this initial video packet containing key frame 173 in step 153 and provides it to the video player 159 for decoding.

Then, the client 150 proceeds to step 154 in which it requests the subsequent frames of the dependent version 160 of the video. Alternatively, step 154 may also be done in parallel with the first request 152 to further ensure the timely delivery of the dependent frames. At the server 100, the request is received at step 112 upon which the server proceeds to step 113 to retrieve the requested dependent frames. To this respect, the server retrieves the first dependent frame 164 subsequent to the key frame 173 and, thereafter, sends the dependent frame 164 to the client in response. Steps 113 and 114 are then continuously repeated until the last dependent frame 166 of the request is received by the client 150. If there is no end frame or time specified in the request of the client 150, then the server sends the subsequent depending frames up to the end of the video or up to a certain predefined maximum playing time before the end of the video. A request 154 for subsequent frames or a temporal dependent version is further referred to as a dependent request.

At the client 150 side, similar steps 155 and 156 are continuously repeated, i.e. in step 155, the client 150 receives the next dependent frame from the server 100 and forwards the frame to the player 159. As a result, the video player 159 receives a video stream 180 comprising a first key frame 173 followed by the dependent frames 164 to 166.

Advantageously, the requests and responses between the client 150 and the server are performed according to the Hypertext Transfer Protocol (HTTP), i.e. by an HTTP GET request from the client and HTTP response from the server. More advantageously, the second request 154 for the subsequent frames establishes a chunked transfer encoding session with the sever allowing the dependent frames to be streamed over a single persistent connection. Support for chunked transfer encoding was introduced in HTTP/1.1. Even more advantageously the dependent request 154 for the subsequent frames is a byte range request wherein the requested byte range corresponds with the range of dependent frames starting after the requested key frame 173. Support for byte range requests was also introduced in HTTP/1.1 and is specified in detail in the IETF's RFC 7233 of June 2014. Information on the availability of the video in both the independent and dependent version may be provided in the form of a URL to a manifest file that is available on the server, for example a manifest file following the Common Media Application Format (CMAF) for segmented media according to ISO/IEC 23000-19.

The independent request 152 contains address information for addressing both the video service 101, identifying the media that is to be streamed and the starting time within the media. The address information may be in the form of a uniform resource identifier, URI, or a uniform resource locator, URL. All three components may be embedded in the path of the URL, e.g. as 'http://streaming.service.com/media_identification/starting_time'. The starting time and/or the media identification may also be provided as a query in the URL. The starting time may be implicit, e.g. the starting time is the beginning when it is not specified. The starting time may also be specified in a predetermined format, e.g. in a certain unit relative from the beginning of the media. For live streaming, a specific 'now' starting time may be defined, i.e. to retrieve the latest available 'first package' for the identified media, e.g. as 'http://streaming.service.com/media_identification/now'. Advantageously, the starting time is provided to the video service in the form of a sequence number. If the player received the starting time as absolute or relative time, then the client 150 first converts the time value to the appropriate sequence number. The information for performing the conversion may be derived from information provided in the manifest file, e.g. by deriving the sequence number from the framerate.

Frames from the independent version 170 may further be packaged in a initialization or initial video packet. Apart from the independent frame 173, such packet may further comprise i) a field with a binary pointer to the subsequent portion of the video, ii) a field with timing information needed for the playback of the frame in the first package, iii) one or more dependent frames. The timing information may also be provided separately for each frame by embedding it within the frame itself. The initial video packet may also comprise only the first independent frame 173 and no further dependent frames. In that case, the pointer refers to the location of the frame subsequent to the independent frame. The initial video packet may also comprise a URL to the manifest file that is available on the video service 101. The creation of the initial video packet my be done by video service upon the reception of the request. Alternatively, the initial video packet may also be stored onto the storage 120 by storing each independent frame 171-176 already as such an initial video packet. In that case, video service 100 only retrieves the first package from the storage 120.

The above embodiments illustrate the streaming of a single video stream, i.e. a single continuous stream intended for complete playback when starting the playback from the video playback client 150. The playback of such a single video stream is performed based on the two requests 152, 154 and by retrieval of the manifest file to obtain further information on the available representations. As a result, regardless of the length of the single video stream, the streaming may be performed by only downloading the manifest file once. As there is no notion of short independently playable chunks or segments, there is no need to constantly retrieve updates of the manifest file. According to an embodiment, the manifest file comprises information on one or more video streams or video portions of such video streams that are to be played one after the other by the video player. Per video stream or portion, further also referred to as a presentation, the manifest file may then further comprise:
- a reference, e.g. URL, to the presentation;
- the timespan of the presentation, i.e. starting time and end time wherein the end time may also be undefined, e.g. for live streams;
- different available qualities for the independent and/or dependent version of the representation, e.g. specified in terms of average bandwidth, resolution, framerate and codec;

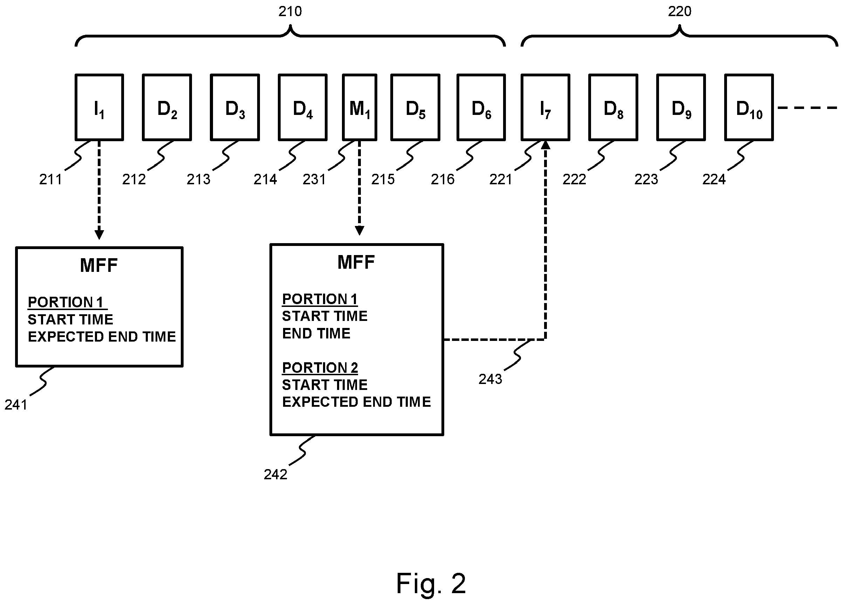

Fig. 2 illustrates a sequence of packets received by a video playback client from a video service according to an example embodiment. The client and server may for example be embodied according to client 150 and video service 100, 120. First, the client receives an initial video packet 211, e.g. upon an independent request 152. Together with this independent request, the client retrieves manifest file 241, e.g. by a URL specified in the first video packet 211 or by an externally provided link, e.g. provided within a web page. Manifest file 241 comprises information on a first portion 210 of the video stream. For example, manifest file 241 comprises the start time of the first portion 210 and the end time or expected end time. Based on this information the video client has all information for playback of the video portion 210 and starts the continuous download of video packets 211 to 216 by a dependent request. During playback of packets 211 to 216, the client is notified of an update of the manifest file 241 by means of an in-stream information field incorporated into the video stream. This in-stream information field may be included within the video packets having the respective dependent frames 212-216. Alternatively, the client may receive the in-stream information field as a separate packet 231 containing the information field in between the video packets 214, 216 holding the respective dependent frames. When receiving this notification, the client retrieves the updated manifest file 242 containing updated information on the first video portion, i.e. its end time and announcing a second portion 220 of the video with its start time and expected end time. By this updated manifest file 242, the client knows that the current portion of the video stream will stop after frame 216 and that it must initiate a new request to obtain the second portion of the video stream, i.e. by again an independent request to obtain initial video packet 221 and a dependent request to obtain the subsequent frames 222-224 from the dependent version.

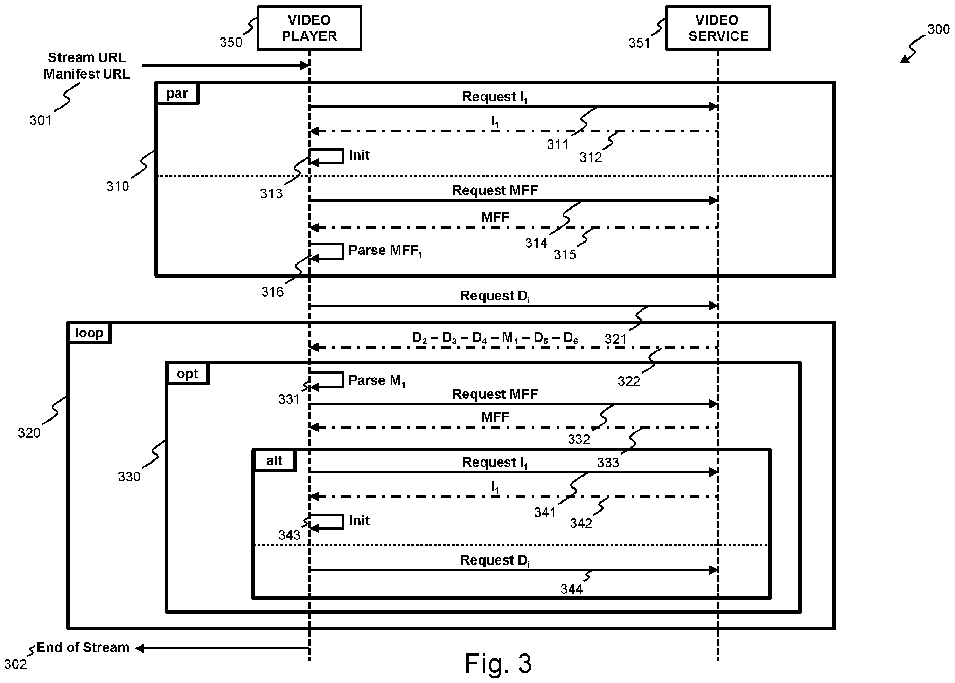

Fig. 3 shows a sequence diagram illustrating the interaction between a video player 350 and video service 351 to establish the video stream of Fig. 2 according to an example embodiment. The playback of the video stream starts with the video player 350 receiving a command 301 to play the video stream containing information to retrieve the video stream from the video service 351, e.g. by receiving a URL to the stream or a URL to the manifest file 241. Then, the video player starts execution block 310. Player 350 requests the initial video packet 211 by the first request 311. In response, video service 351 provides 312 the initial video packet 211 to the video player 350. With this initial video packet 211, the video player initializes 313 the playback of the video. Further, the video player also requests 314 the manifest file 241 from the video service 351 and receives 315 it in response. Thereupon, the video player parses the received manifest file 241. Based on the received information from the initial packet 211 and/or the manifest file 241, the video player 350 performs a dependent request 321 to the video service 351 for the frames from the dependent version. According to the manifest file, the player 350 may select the most appropriate dependent version.

Upon request 322, service 351 starts sending 322 the sequence of frames to the video player 350. Near the end of the sequence, the video service updates the manifest file 241. To notify this to the video player 350, the video service 351 adds the information field 231 (M1) to the sequence. Upon receiving such information field 231, the video player 350 starts execution block 330 and parses 331 the received information field 231. As the information field indicates the update of the manifest file, the video player 350 requests the updated manifest file 242 upon which the video service 351 sends 322 the updated manifest file 242 to the video player 350. By the updated manifest file, the video player 350 is made aware of the new portion 220 of the video stream, e.g. by its start time 243 and reference to the stream. Based on this information, the video player 350, issues a new request 341 to video service 351 for the initial video packet 221 and initializes 343 the player after receival 342 of the packet 221. Then, video player 350 also requests 344 the subsequent frames 222-224 from the dependent version of the stream. Execution block 320 may be repeated during playback of the video, i.e. a sequence of presentations may be played by notifying the video player 350 when an updated version of the manifest file is available.

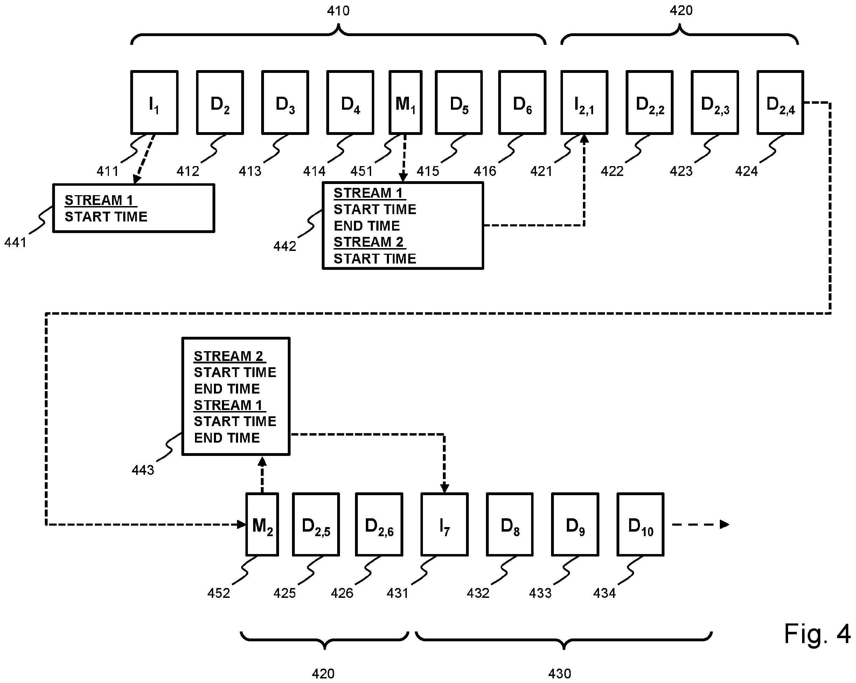

Fig. 4 illustrates a sequence of packets received by a video playback client from a video service according to an example embodiment. The client and server may for example be embodied according to client 150 and video service 100, 120. First, the client receives an initial video packet 411, e.g. upon independent request 152. Together with this independent request, the client retrieves manifest file 441, e.g. by a URL specified in the first video packet 411 or by an externally provided link, e.g. provided within a web page. Manifest file 441 comprises information for the playback of a first video stream 410, 430 illustrated by the sequence 411 till 416 and then 431 till 434. Based on this manifest file 441 the video client starts the continuous download of video packets from the dependent version by a dependent request. During playback of packets 411 to 416, the client is notified of an update of the manifest file 441 by means of an in stream information field 451 incorporated into the first video stream. When receiving this notification, the client retrieves the updated manifest file 442 containing the end time of the first stream and information for a second stream 420 that is to be played thereafter. By this updated manifest file 442, the client knows that the current video stream is to be interrupted after frame 416 and that it must initiate a new request to obtain the second video stream, i.e. by again an independent request to obtain initial video packet 421 and a dependent request to obtain the subsequent frames 422-426 from the dependent version. During the playback of the second stream 420, the client is again notified by an in stream information field 452 that an updated version 443 of the manifest file is available. This updated manifest file sets an end time of the second stream and indicates that the first stream 430 is to be resumed thereafter. Thereupon, the client performs an independent request for first video packet 431 and a dependent request for dependent frames 432-434 thereby resuming the second video stream.

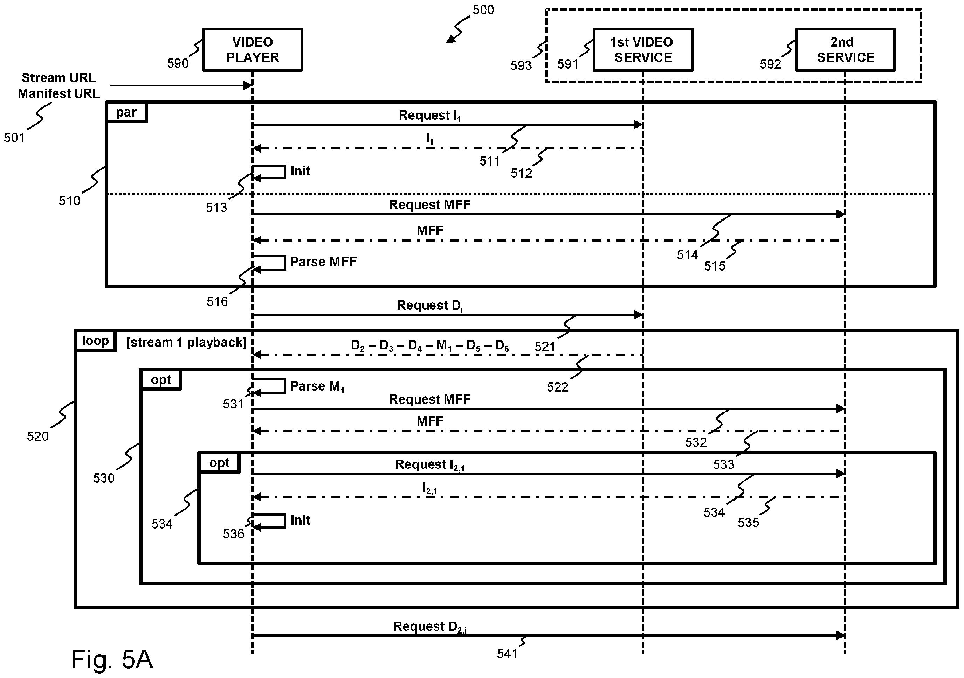

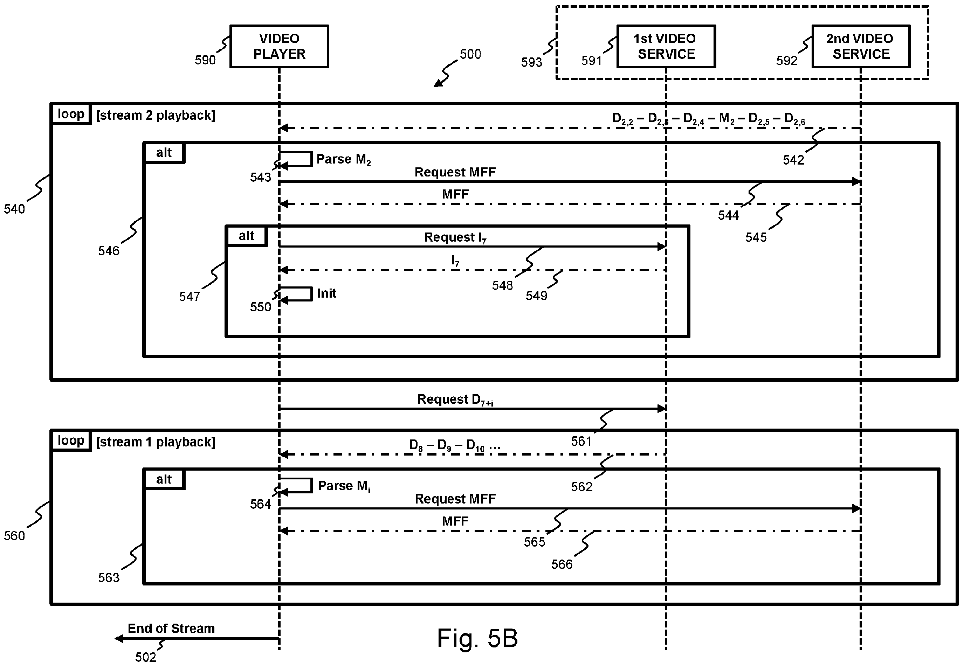

The combination of Fig. 5A and Fig. 5B shows a sequence diagram 500 according to an example embodiment illustrating the interaction between a video player 590 and video service 593. Video service 593 comprises a first video service 591 for providing video streams and a second video service 592 for providing video streams. By sequence diagram 500, the streaming of a first video stream from first video service 591 may be interrupted to play a second video stream from second video service 592. By diagram 500 the playback according to Fig. 4 may be achieved. The playback starts with the video player 590 receiving a command 501 containing information to retrieve the first video stream from the video service 591, e.g. by receiving a URL to the stream or a URL to the manifest file 441. Then, the video player starts execution block 510. Player 590 requests the initial video packet by the independent request 511. In response, video service 591 provides 512 the initial video packet to the video player 590. With this initial video packet, the video player initializes 513 the playback of the video. Further, the video player also requests 514 the manifest file 541. The manifest file 441 initially contains the information to play the first video stream from the first video service 591 but is made available through the second video service 592. The video player 590 receives the manifest file in response 515. Thereupon, the video player 590 parses the received manifest file, e.g. manifest file 442. Based on the received information from the initial video packet and/or the manifest file, the video player 590 performs a request 521 to the first video service 591 for the frames from the dependent version. According to the manifest file, the player 590 may select the most appropriate dependent version.

Upon request 521, first video service 591 starts sending 522 the sequence of frames to the video player 590. At a certain moment in time, it may be decided to interrupt the playback of the first video stream and to insert a second video stream. In order to do so, an updated version of the manifest file, e.g. manifest file 442, is created by second video service 592. In order to inform the video player of the updated manifest file, an in-stream information field, e.g. field 451, is present in the first video stream before the interruption. Upon receiving the in-stream information field, the video player 590 starts execution block 530 and parses 531 the received in-stream information field. As the information field indicates the update of the manifest file, the video player 590 requests the updated manifest file upon which the second video service 592 sends 533 the updated manifest file to the video player 590. By the updated manifest file, the video player 590 is made aware of the second video stream, e.g. by its start time and reference to the second stream. Based on this information, the video player 590 starts execution block 534 by issuing an independent request 534 to second video service 592 for the initial video packet and initializes 536 the player after receival 535 of the packet. Then, video player 590 also requests the subsequent frames from the dependent version of the stream by depend request 541 and receives them by means of response 542.

After the playback of the second video stream, the video player 590 should resume playback of the first video stream. In order to do so, an updated version of the manifest file, e.g. manifest file 443, is created by second video service 592. In order to inform the video player 590 of the updated manifest file, an in-stream information field, e.g. field 451, is present in the first video stream before the end of the second stream. Upon receiving the in-stream information field, the video player 590 starts execution block 546 and parses 543 the received in-stream information field. As the information field indicates the update of the manifest file, the video player 590 requests 544 the updated manifest file upon which the second video service 592 sends 545 the updated manifest file to the video player 590. By the updated manifest file, the video player 590 is made aware of the second video stream, e.g. by its start time and reference to the second stream. Based on this information, the video player 590 starts execution block 547 by issuing an independent request 548 to first video service 591 for the initial video packet of the first stream and initializes 550 the player after receival 549 of the packet. Then, video player 590 also requests the subsequent frames from the dependent version of the first stream by depend request 561 and receives them by means of response 562 thereby resuming the playback 560 of the first video stream. During the playback 560, further updates of the manifest file may be made available by means of in-stream information fields whereupon the video player 590 retrieves the update by parsing step 564, requesting step 565 and receiving step 566.

By the steps according to sequence diagram 500, video playback in video player 590 may be controlled by the video service 593. By means of the in-stream information fields, there is no need for the video player 590 to constantly check for updates of the manifest file. Further, the manifest file may be dynamically updated, e.g. the second video stream may be selected by the second video service 592 according to received metrics of the video player 590, e.g. based on a user profile, a location, and a time of viewing. Sequence diagram 500 allows for server-side stream insertion by the second video service 592. The second video stream may for example correspond to advertisements, thereby achieving server-side advertisement insertion. Execution block 540 may be executed more than once in order to show more than one video stream from second video service 592 before resuming the playback 560 of first video stream.

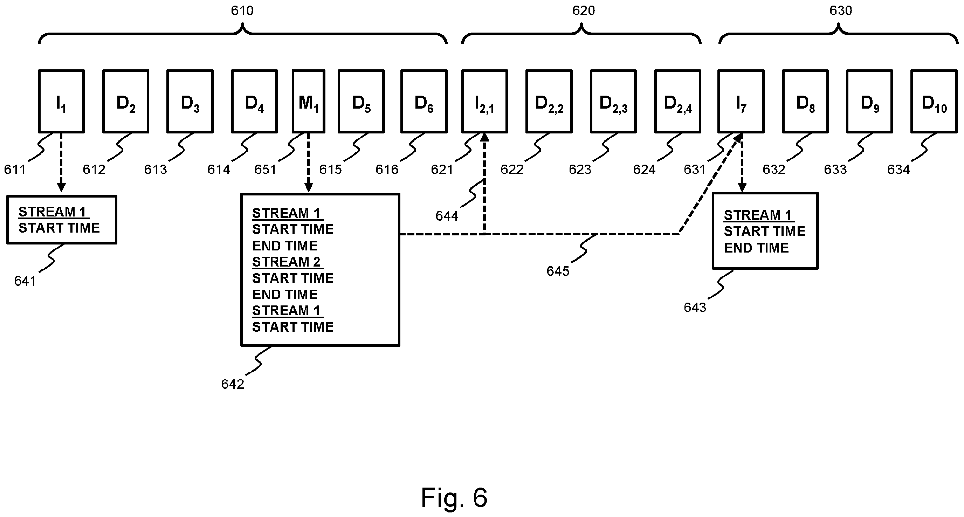

Fig. 6 illustrates a sequence 610, 620, 630 of packets received by a video playback client from a video service according to an example embodiment. The client and server may for example be embodied according to client 150 and video service 100, 120. First, the client receives an initial video packet 611, e.g. upon an independent request 152. Together with this independent request, the client retrieves manifest file 641, e.g. by a URL specified in the first video packet 611 or by an externally provided link, e.g. provided within a web page. Manifest file 641 comprises information for the playback of a first video stream 610, 630 illustrated by the sequence 611 till 616 and then 631 till 634. Based on this manifest file 641 the video client starts the continuous download of video packets from the dependent version by a dependent request. During playback of packets 611 to 616, the client is notified of an update of the manifest file 641 by means of an in-stream information field 651 incorporated into the first video stream. When receiving this notification, the client retrieves the updated manifest file 642 containing: i) the end time of the first stream, ii) information for a second stream 620 that is to be played thereafter, iii) an instruction thereto, iv) information for the continuation of the first stream after the playback of the second stream. By this updated manifest file 642, the client knows that the current video stream 610 is to be interrupted after frame 616 and that it must initiate a new request to obtain the second video stream 620, i.e. by again an independent request to obtain initial video packet 621 and a dependent request to obtain the subsequent frames 622-626 from the dependent version. After the playback of the second stream, the client resumes the playback of the first stream 630 based on the information in the manifest file 642. Thereto, the client performs an independent request for first video packet 631 and a dependent request for dependent frames 632-634 thereby resuming the second video stream.

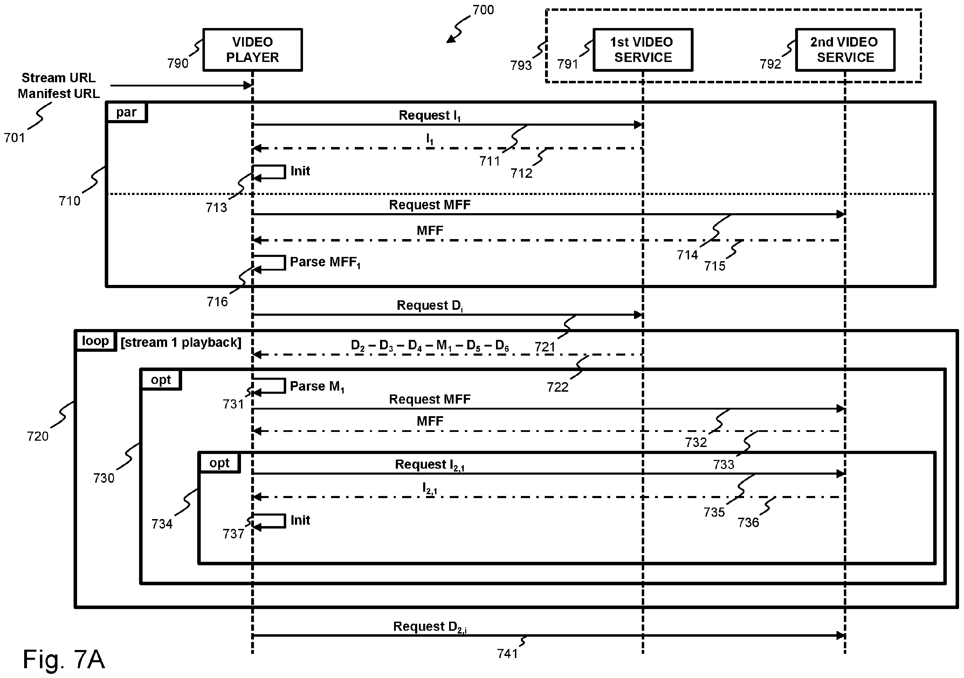

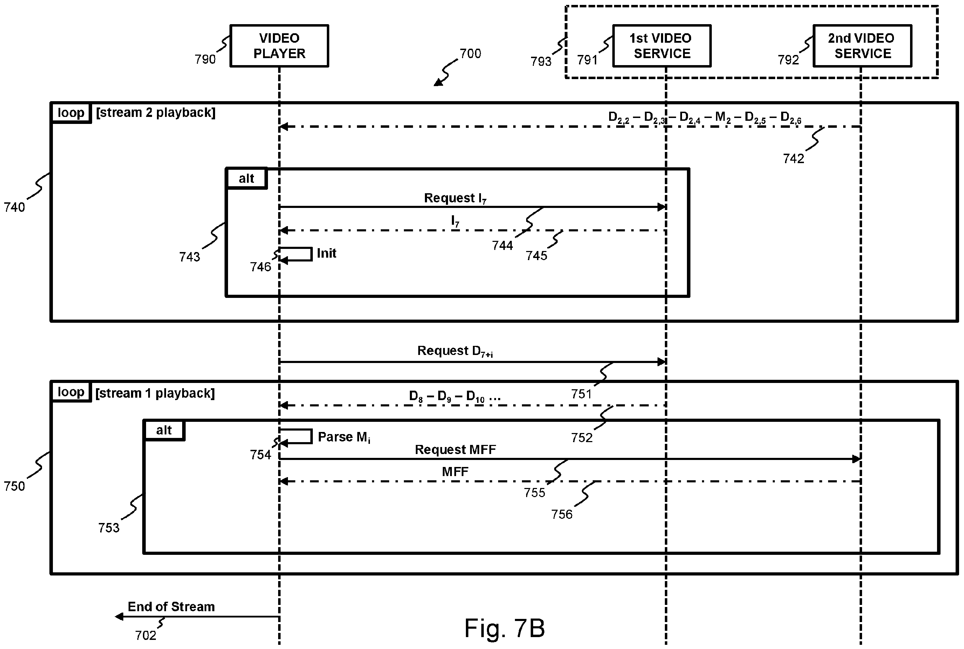

The combination of Fig. 7A and Fig. 7B shows a sequence diagram 700 according to an example embodiment illustrating the interaction between a video player 790 and video service 793. Video service 793 comprises a first video service 791 for providing video streams and a second video service 792 for providing video streams. By sequence diagram 700, the streaming of a first video stream from first video service 791 is interrupted to play a second video stream from second video service 792. By diagram 700 the playback according to Fig. 6 may be achieved. The playback starts with the video player 790 receiving a command 701 containing information to retrieve the first video stream from the video service 791, e.g. by receiving a URL to the stream, a URL to the manifest file 741, or both. Then, the video player starts execution block 710. Player 790 requests the initial video packet by the independent request 711. By response 712, video service 791 provides the initial video packet to the video player 790. With this initial video packet, the video player initializes 713 the playback of the video. Further, the video player also requests 714 the manifest file 641. The manifest file 641 initially contains the information to play the first video stream from the first video service 791 but is made available through the second video service 792. The video player 790 receives the manifest file in response 515. Thereupon, the video player 790 parses the received manifest file, e.g. manifest file 642. Based on the received information from the initial video packet and/or the manifest file, the video player 790 performs a request 721 to the first video service 791 for the frames from the dependent version. According to the manifest file, the player 790 may select the most appropriate dependent version.

Upon request 721, first video service 791 starts sending 722 the sequence of frames to the video player 790. At a certain moment in time, it may be decided to interrupt the playback of the first video stream and to insert a second video stream. In order to do so, an updated version of the manifest file, e.g. manifest file 742, is created by second video service 792. In order to inform the video player of the updated manifest file, an in-stream information field, e.g. field 751, is present in the first video stream before the interruption. Upon receiving the in-stream information field, the video player 790 starts execution block 730 and parses 731 the received in-stream information field. As the information field indicates the update of the manifest file, the video player 790 requests the updated manifest file upon which the second video service 792 sends 733 the updated manifest file to the video player 790. By the updated manifest file, the video player 790 is informed and instructed on the playback of the second video stream and the resumption of the first video stream thereafter. Based on this information, the video player 790 starts execution block 734 by issuing an independent request 734 to second video service 792 for the initial video packet and initializes 736 the player after receival 735 of the packet. Then, video player 790 also requests the subsequent frames from the dependent version of the stream by depend request 741 and receives them by means of response 742 as shown in execution block 740.

After the playback of the second video stream, the video player 790 should resume playback of the first video stream as per instruction in the already received manifest file. In order to do so, video player 790 issues an independent request 744 to first video service 791 for the initial video packet of the first stream and initializes 746 the player after receival 745 of the video packet. Then, video player 790 also requests the subsequent frames from the dependent version of the first stream by depend request 751 and receives them by means of response 752 thereby resuming the playback 750 of the first video stream. During the playback 750, further updates of the manifest file may be made available by means of in-stream information fields whereupon the video player 790 retrieves the update by parsing step 754, requesting step 755 and receiving step 756.

By the steps according to sequence diagram 700, video playback in video player 790 may be controlled by the video service 793. By means of the in-stream information fields, there is no need for the video player 790 to constantly check for updates of the manifest file. Further, the manifest file may be dynamically updated, e.g. the second video stream may be selected by the second video service 792 according to received metrics of the video player 790, e.g. based on a user profile, a location, and a time of viewing. Sequence diagram 700 allows for server-side stream insertion by the second video service by a single update of the manifest file. The second video stream may for example correspond to advertisements, thereby achieving server-side advertisement insertion. Execution block 740 may be executed more than once in order to show more than one video stream from second video service 792 before resuming the playback 730 of the first video stream.

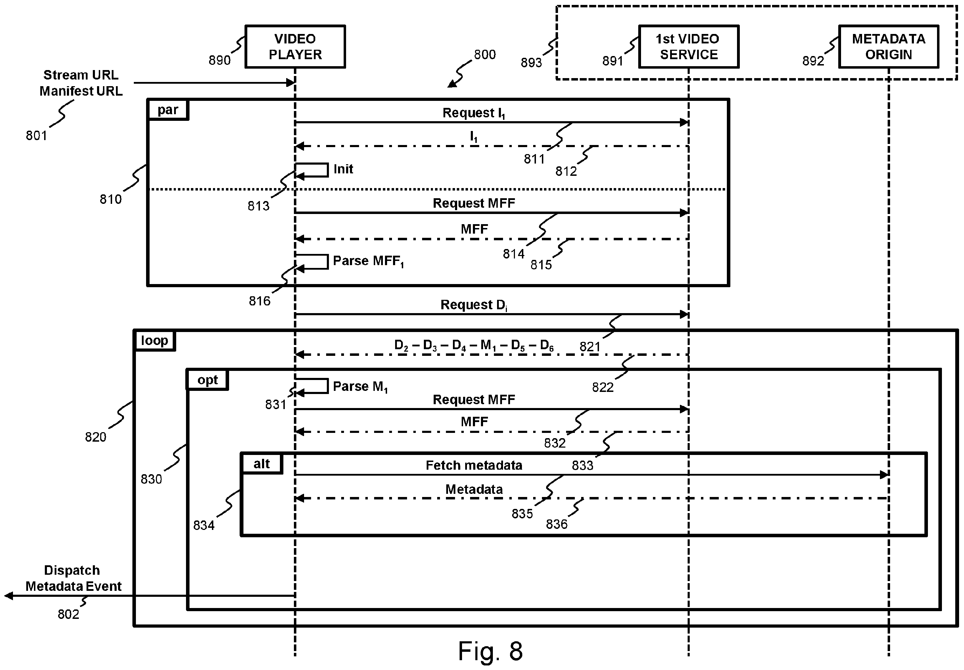

The above described embodiments illustrated solutions for the controlled playback of video streams by use of in-stream notification fields signalling an updated manifest file. This mechanism may also be used for signalling other updates available through the manifest file. To this respect, Fig. 8 shows a sequence diagram 800 according to an example embodiment illustrating the interaction between a video player 890 and video service 893. Video service 893 comprises a first video service 891 for providing video streams and a metadata origin service 892 for providing other data, i.e. metadata, outside the video stream. Such metadata may for example relate to any one of a message or picture that is to be displayed on top or within the video, a subtitle stream, background information on the video stream etc. The playback of the video stream itself starts with the video player 890 receiving a command 801 containing information to retrieve the first video stream from the video service 891, e.g. by receiving a URL to the stream, a URL to the manifest file 841, or both. Then, the video player starts execution block 810. Player 890 requests the initial video packet by the independent request 811. By response 812, video service 891 provides the initial video packet to the video player 890. With this initial video packet, the video player initializes 813 the playback of the video. Further, the video player also requests 814 the manifest file. The manifest file 8 initially contains the information to play the first video stream from the first video service 891. The video player 890 receives the manifest file in response 815. Thereupon, the video player 890 parses the received manifest file. Based on the received information from the initial video packet and/or the manifest file, the video player 890 performs a request 821 to the first video service 891 for the frames from the dependent version. According to the manifest file, the player 890 may select the most appropriate dependent version. Upon request 821, first video service 891 starts sending 822 the sequence of frames to the video player 890. At a certain moment in time, the video service 891 decides to signal a metadata event to video player 890. Video service 891 may for example be notified of the metadata event by another notification mechanism between the metadata origin service 892 and the first video service 891. In order to do so, an updated version of the manifest file is created by first video service 891 containing a reference to the metadata event. In order to inform the video player of the updated manifest file, an in-stream information field is inserted in the first video stream. Upon receiving the in-stream information field, the video player 890 starts execution block 830 and parses 831 the received in-stream information field. As the information field indicates the update of the manifest file, the video player 890 requests the updated manifest file upon which the video service 891 sends 833 the updated manifest file to the video player 890. By the updated manifest file, the video player 890 is informed on the existence of the metadata event on the metadata origin service 892. With this information, video player 890 fetches the metadata by request 835 and response 836. Video player 890 may then process or handle the metadata event accordingly.

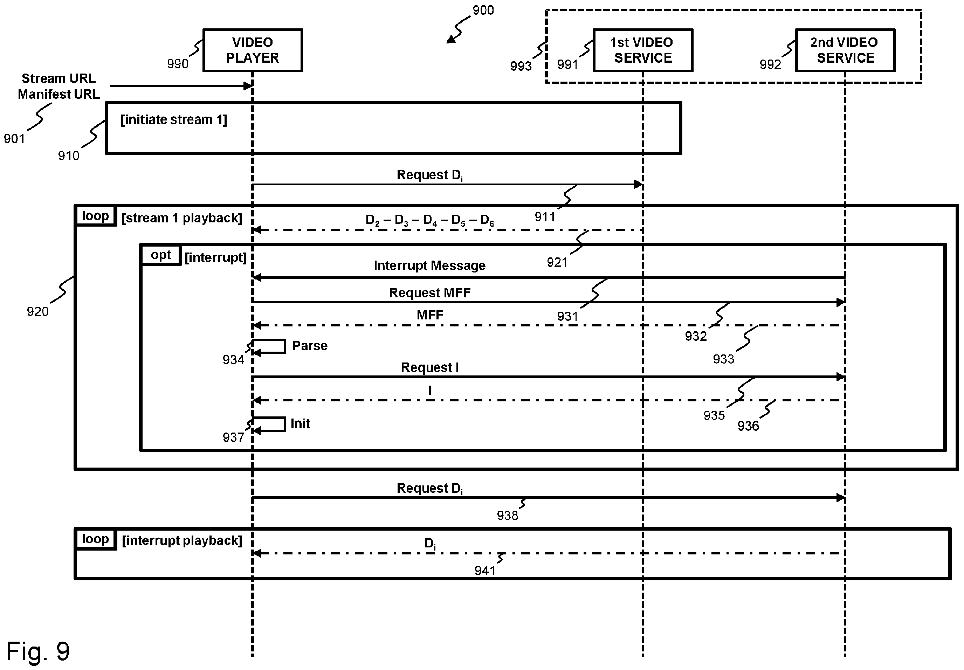

The above embodiments described an in-stream information field either included in a video packet or in a separate dedication packet for notification of an updated manifest file. According to an embodiment, an in-stream information field may be replaced with an out-of-band notification, i.e. a message that is not included in the video stream. Fig. 9 shows a sequence diagram 900 further illustrating the use of such out-of-band notification 931. Fig. 9 illustrates the interaction between a video player 990 and video service 993. Video service 993 comprises a first video service 991 for providing video streams and a second video service 992 for providing video streams. By sequence diagram 900, the streaming of a first video stream from first video service 991 is interrupted to play a second video stream from second video service 992. The playback starts with the video player 990 receiving a command 901 containing information to retrieve the first video stream from the video service 991, e.g. by receiving a URL to the stream or a URL to the manifest file. Then, the video player starts execution block 910. No further details of execution block 910 are shown, but this block may operate in the same way as execution block 310 as shown in Fig. 1 to initialize the first video stream from the first video service 991. After initialization of the first video stream, upon request 911, first video service 991 starts sending 921 the sequence of dependent frames to the video player 990. At a certain moment in time, second video service 992 decides to interrupt the playback of the first video stream and to insert a second video stream. Such interruption may be supported by video player 990. For example, second video service 992 may corresponds to a breaking news server that is allowed interrupting playback of ongoing video streams. In order to do so, a manifest file, is created by second video service 992. In order to inform the video player of the manifest file, an out-of-band notification message 931 is sent to video player 990. Upon receiving the notification, the video player 990 is notified of the new manifest file and requests 932 it from the second video service. Thereupon, the second video service 992 sends 933 the updated manifest file to the video player 990. By the updated manifest file, the video player 990 is made aware of the second video stream that is to be played immediately. Based on this information in the manifest file, the video player 990 issues an independent request 935 to second video service 992 for the initial video packet and initializes 937 the player after receival 936 of the packet. Then, video player 990 also requests the subsequent frames from the dependent version of the stream by depend request 938 and receives them by means of response 941.

The above embodiments have been described with reference to video streams. It should be understood that the present disclosure may be applied to any kind of media stream, including but not limited to audio and metadata such as subtitles. Thus, a media stream may comprise any one of: one or more audio streams, one or more metadata streams, and one or more video streams.

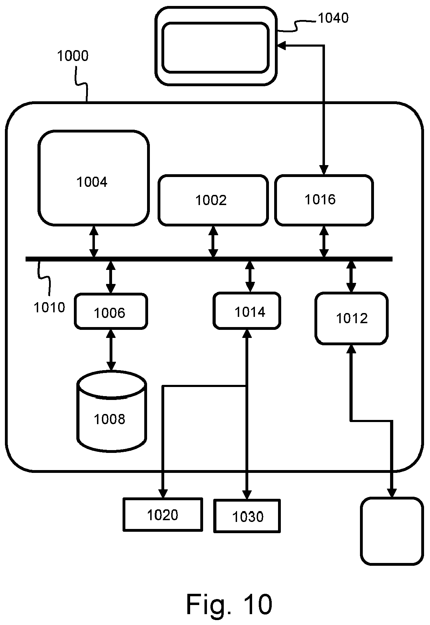

Fig. 10 shows a suitable computing system 1000 enabling the performance of the described steps according to the various embodiments. Computing system 1000 may in general be formed as a suitable general-purpose computer and comprise a bus 1010, a processor 1002, a local memory 1004, one or more optional input interfaces 1014, one or more optional output interfaces 1016, a communication interface 1012, a storage element interface 1006, and one or more storage elements 1008. Bus 1010 may comprise one or more conductors that permit communication among the components of the computing system 1000. Processor 1002 may include any type of conventional processor or microprocessor that interprets and executes programming instructions. Local memory 1004 may include a random-access memory (RAM) or another type of dynamic storage device that stores information and instructions for execution by processor 1002 and/or a read only memory (ROM) or another type of static storage device that stores static information and instructions for use by processor 1002. Input interface 1014 may comprise one or more conventional mechanisms that permit an operator or user to input information to the computing device 1000, such as a keyboard 1020, a mouse 1030, a pen, voice recognition and/or biometric mechanisms, a camera, etc. Output interface 1016 may comprise one or more conventional mechanisms that output information to the operator or user, such as a display 1040, etc. Communication interface 1012 may comprise any transceiver-like mechanism such as for example one or more Ethernet interfaces that enables computing system 1000 to communicate with other devices and/or systems, for example with the video player or video services according to the above described embodiments. The communication interface 1012 of computing system 1000 may be connected to such another computing system by means of a local area network (LAN) or a wide area network (WAN) such as for example the internet. Storage element interface 1006 may comprise a storage interface such as for example a Serial Advanced Technology Attachment (SATA) interface or a Small Computer System Interface (SCSI) for connecting bus 1010 to one or more storage elements 1008, such as one or more local disks, for example SATA disk drives, and control the reading and writing of data to and/or from these storage elements 1008. Although the storage element(s) 1008 above is/are described as a local disk, in general any other suitable computer-readable media such as a removable magnetic disk, optical storage media such as a CD or DVD, -ROM disk, solid state drives, flash memory cards, ... could be used. Computing system 1000 could thus correspond to the circuitry for executing the steps of the video player and video service according to the various described embodiments.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A method for controlled video streaming from a remote video service (100, 351, 593, 793, 893, 993) to a video playback client (150, 350, 590, 790, 890, 990); and wherein the remote video service is configured to make a first video stream available to the client upon request in at least a temporal independent version (170) and a temporal dependent version (160); the method comprising:
- by the client, upon a first request (152, 311, 511, 711, 811) to the remote video service, retrieving and playing (153, 312, 512, 712, 812) an initial video packet (211, 411, 611) from the temporal independent version, and upon a second request (154, 321, 521, 721, 821, 911) to the remote video service, continuously receiving and playing (155, 156, 322, 522, 722, 822, 921) frames (212-216, 412-416, 612-616) from the temporal dependent version, thereby streaming a first video stream (180, 210, 410, 610);
- by the remote video service, making an updated manifest file (242, 442, 642) available for retrieval by the video playback client;
- by the remote video service, notifying (231, 331, 451, 531, 651, 731, 831, 931) the client of the updated manifest file (242, 442, 642);
- by the client, retrieving (332-333, 532-533, 732-733, 832-833, 931-932) the updated manifest file (242, 451, 651) from the remote video service.

2. The method according to claim 1 wherein the notifying is performed by an in-stream information field (231, 451, 651) contained in the first video stream.

3. The method according to claim 1 wherein the notifying is performed by a notification message (931) outside the first video stream.

4. The method according to any of claims 1 to 3 further comprising, by the client, obtaining (301, 501, 701, 801, 901) a location of a manifest file for playback of the first stream and retrieving (314-315, 514-515, 714-715, 814-815) the manifest file accordingly.

5. The method according to any of the preceding claims wherein the updated manifest file (442, 642) comprises an identification of at least one other video stream (420, 620) in at least a temporal independent version and a temporal dependent version and comprises an instruction for the playback of the at least one other video stream; the method further comprising:
- by the client, streaming (540, 740) the at least one other video stream.

6. The method according to claim 5 wherein the manifest file (642) further comprises an instruction (645) for resuming the first video stream (630) after the playback of the at least one other video stream; the method further comprising:
- by the client, resuming (750) the streaming of the first video stream after the playback (740) of the at least one other video stream.

7. The method according to claim 5 further comprising:
- by the remote video service, making a second updated manifest file (443) available for retrieval by the video playback client; the second updated manifest file (443) further comprising an instruction for resuming the first video stream (430);
- by the remote video service, notifying (452) the client of said second updated manifest file;
- by the client, retrieving (544-545) the second updated manifest file (443) from the remote video service; and
- by the client, resuming the playback (560) of the first video stream after the playback (540) of the at least one other video stream.

8. The method according to claim 5 further comprising:
- by the remote video service, making a second updated manifest file available for retrieval by the video playback client comprising an identification of a second at least one other video stream in at least a temporal independent version and a temporal dependent version and comprising an instruction for the playback of the second at least one other video stream; the method further comprising;
- by the remote video service, notifying the client of said second updated manifest file;
- by the client, retrieving the second updated manifest file from the remote video service; and
- by the client, streaming the second at least one other video stream.

9. The method according to claim 1 wherein the updated manifest file (242) comprises an identification (243) of a subsequent portion (220) of the first video stream; the method further comprising, by the client, streaming (320) the subsequent portion (220) of the first video stream.

10. The method according to claim 1 wherein the updated manifest file comprises an identification of a metadata event; the method further comprising fetching (835- 836) the metadata event while continuing the continuously receiving and playing (822) frames from the temporal dependent version.

11. A method for controlled video streaming from a remote video service (100, 351, 593, 793, 893, 993) to a video playback client (150, 350, 590, 790, 890, 990); and wherein the remote video service is configured to make a first video stream available to the client upon request in at least a temporal independent version (170) and a temporal dependent version (160); the method comprising, by the video playback client:
- upon a first request (152, 311, 511, 711, 811) to the remote video service, retrieving and playing (153, 312, 512, 712, 812) an initial video packet (211, 411, 611) from the temporal independent version, and upon a second request (154, 321, 521, 721, 821, 911) to the remote video service, continuously receiving and playing (155, 156, 322, 522, 722, 822, 921) frames (212-216, 412-416, 612-616) from the temporal dependent version, thereby streaming a first video stream (180, 210, 410, 610);
- receiving a notification (231, 331, 451, 531, 651, 731, 831, 931) of an updated manifest file (242, 442, 642); and
- retrieving (332-333, 532-533, 732-733, 832-833, 931-932) the updated manifest file (242, 451, 651) from the remote video service.

12. A method for controlled video streaming from a remote video service (100, 351, 593, 793, 893, 993) to a video playback client (150, 350, 590, 790, 890, 990); and wherein the remote video service is configured to make a first video stream available to the client upon request in at least a temporal independent version (170) and a temporal dependent version (160); the method comprising, by the remote video service:
- upon a first request (152, 311, 511, 711, 811) from the video playback client, sending (153, 312, 512, 712, 812) an initial video packet (211, 411, 611) from the temporal independent version, and upon a second request from the video playback client (154, 321, 521, 721, 821, 911) continuously sending (155, 156, 322, 522, 722, 822, 921) frames (212-216, 412-416, 612-616) from the temporal dependent version, thereby streaming a first video stream (180, 210, 410, 610) to the video playback client;
- making an updated manifest file (242, 442, 642) available for retrieval by the video playback client;
- notifying (231, 331, 451, 531, 651, 731, 831, 931) the client of the updated manifest file (242, 442, 642);
- upon request of the video playback client, sending (332-333, 532-533, 732-733, 832-833, 931-932) the updated manifest file (242, 451, 651) to the video playback client.

13. A networking device comprising at least one processor (1002) and at least one memory (1004) including computer program code, the at least one memory and computer program code configured to, with the at least one processor, cause the controller to perform any of the steps performed by the video playback client or the remote video service according to any of the claims 1 to 12.

14. A computer program product comprising computer-executable instructions for causing the performance of the networking device according to claim 13.

15. A computer readable storage medium comprising computer-executable instructions for performing the steps by the video playback client and/or the video service according to any of claims 1 to 12 when the program is run on a computer.
